# EUROPEAN PATENT SPECIFICATION

(11) **EP 3 095 221 B1**
(45) Date of publication and mention of the grant of the patent: **13.05.2020**
(21) Application number: 14704692.4
(22) Date of filing: 15.01.2014
(51) Int. Cl.: H04W 12/00, H04L 29/06

(54) **METHODS AND NODES SUPPORTING LAWFUL INTERCEPT**
VERFAHREN UND KNOTEN ZUR UNTERSTÜTZUNG LEGALEN ABHÖRENS
PROCÉDÉS ET NOEUDS PRENANT EN CHARGE UNE INTERCEPTION LÉGALE

(43) Date of publication of application: 23.11.2016
(73) Proprietor: Telefonaktiebolaget LM Ericsson (publ), 164 83 Stockholm (SE)
(72) Inventor: WESTBERG, Lars, SE-745 96 Enköping (SE); FRIMAN, Erik, SE-113 24 Stockholm (SE); VIKBERG, Jari, SE-153 38 Järna (SE)
(74) Representative: Zacco Sweden AB
(86) International application number: PCT/SE2014/050037
(87) International publication number: WO 2015/108452

(56) References cited:
- WO-A1-2013/139791
- "SA3-LI Living Document: Mobile Cloud Services Lawful Interception Impact Evaluation;SA3-LI LD MOBILE CLOUD SERVICES", ETSI DRAFT; SA3-LI LD MOBILE CLOUD SERVICES, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. LI - LI_am, no. V0.1.2, 20 September 2013 (2013-09-20), pages 1-75, XP014213634, [retrieved on 2013-09-20]

## Description

### TECHNICAL FIELD

The present technology relates to a Lawful Interception in a wireless communication network.

### BACKGROUND

According to lawful interception (LI), all signalling and data delivered to an end user under LI needs to be collected. One condition under LI is that LI activity should not be able to be detected by the end user under LI or other people.

One problem arises when data delivered to an end user or used by the end user does not pass an intercept access point of a LI system as nodes of a Radio Access Network (RAN) or the UE normally do not contain any LI functionality.

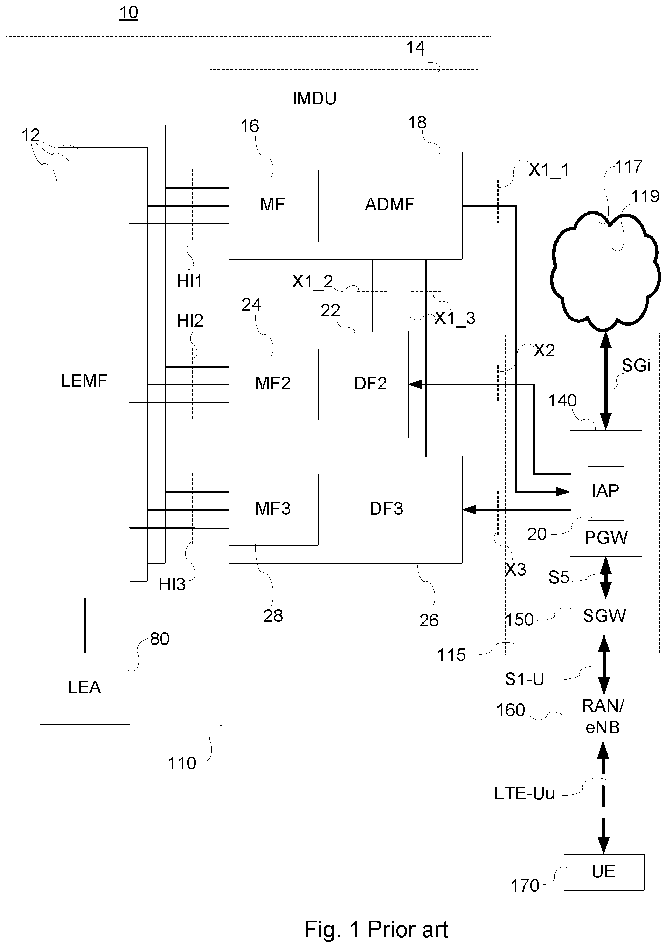

Figure 1 shows the 3GPP standardized interfaces for LI in the packet domain.

Figure 1 is a block diagram of an exemplary Lawful Interception (LI) system 110 and network 10 according to prior art. Said system and network comprises a number of entities. The exemplary LI system comprises a Law Enforcement Management Function, LEMF, 12 for requesting LI services of the LI system and collecting the intercepted information of Intercepting Access Points, lAPs, 20 in the system. The system shall provide access to the intercepted Content of Communications, CC, and Intercept Related Information, IRI, of a target and services related to the target on behalf of one or more Law Enforcement Agencies, LEAs 80. A target is a person of interest and/or user equipment possessed or used by the person of interest being surveyed by the LEA. An intercept request, also denoted Request for LI activation, is sent through a first Handover Interface, H11, located between the Law Enforcement Management Function 12 and an Intercept Mediation and Delivery Unit, IMDU, 14 comprising a Mediation Function, MF, 16 and an Administration Function, ADMF, 18. Said Mediation Function 16 and Administration Function 18 generate based on said received request a warrant comprising said one or more target identities, and sends said warrant towards an Intercept Control Element, ICE, in an Interception Access Point, IAP, 20 via an interface denoted X1_1. The IAP 20 may be connected to a node of a network, e.g. the Internet, a 3GMS (third generation Mobile Communications System), an Evolved Packet System (EPS) etc, from which it intercepts said Content of Communications and Intercept Related Information of a mobile target. Said CC and IRI are network related data. As reference to the standard model, see references [1], [2] and [3], the content of communication is intercepted in the IAP network node and it is based upon duplication of target communication payload without modification. In reference [3], the interfaces HI1 and HI2 are specified in more detail. The IAP sends IRI raw data via an interface X2 to a Delivery Function for IRI reporting, DF2, 22 and a Mediation Function of IRI, MF2, 24 that generates and delivers to a collection functionality a standardized IRI report based on the received IRI report. Said standardized IRI report is sent over a standardized interface HI2 to the LEMF 12. The IAP 20 also sends CC raw data via an interface X3 to a Delivery Function for CC reporting, DF3, 26 and a Mediation Function of IRI, MF3, 28 which generates and delivers to a collection functionality a standardized CC report based on the received CC report. Said standardized CC report is sent over a standardized interface HI3 to the requesting LEMF 12.

Together with the delivery functions it is used to hide from the third generation (3G) Intercepting Access Point IAP entities that there might be multiple activations by different Lawful Enforcement Agencies on the same target.

The HI2 and HI3-interfaces represent the interfaces between the LEA and two delivery functions. The delivery functions are used:
- to distribute the Intercept Related Information (IRI) to the relevant LEA(s) via HI2;
- to distribute the Content of Communication (CC) to the relevant LEA(s) via HI3.

According to known internet access services, all the IP streams related to a given target is intercepted and delivered as a whole session data flow regardless any service used within an interception session.

In the example in figure 1, the IAP 20 is connected to, or contained within a user plane gateway, PGW, in a node 140 in a CN 115. The IAP may be connected to any type of user plane gateway, e.g. SGW, PGW and GGSN. The same interfaces are also used for control plane nodes like MME and HLR/HSS. Streams of content flow through the user plane gateway in both directions to the UE and from the UE. In one direction, content may come from any site within the CN or any site 119 in a connected communications network 117, e.g. LAN, WLAN, WAN, RAN, etc. The flow passes the (S)Gi interface connected to the user plane gateway. LI is therefore possible to perform. The flow passes an interface S5 between the PGW node 140 and a SGW node 150, and through an interface S1-U between the SGW node 150 and a RAN/eNB 160 comprising one or more radio base stations, e.g. eNB. The radio base station forwards the content flow via the air interface LTE-Uu to the designated UE 170.

In the other direction, flow of packets comprising content generated by the UE passes the same interfaces, nodes and gateways. When passing the IAP entity, LI is performed.

The main problem to solve is to support LI functionality in the case of content cached below the existing CN sites, either in the RAN or in the UE. When, or if, the cached content is used by the UE, the content do not pass a site comprising an IAP. Any LI is therefore not possible.

Third Generation Partnership Project (3GPP) document "SA3-LI LD Living Document: Mobile Cloud Services Lawful Interception Impact Evaluation", version 0.1.2 (2013-04) seems to be directed to monitoring a radio access network connection with a user and causing intercept information with the connection to be provided. WO 2013/139791 A1 seems to be directed to mobile cloud services lawful interception impact evaluation using file sharing systems.

### SUMMARY

The invention is defined by the independent claims. Furthermore, the embodiments of the invention are those defined by the claims. Moreover, examples and embodiments, which are not covered by the claims are presented not as embodiments of the invention, but as background art or examples useful for understanding the invention.

The problem to be solved is thus to support for LI also in the cases when any content is returned to the UE below nodes that normally perform LI. A method and embodiments thereof are provided, which are performed in a first node of a communication network. Said node being connected to a Lawful Interception, LI, system. Said method comprises receiving from a Radio Access Network, RAN, a LI notification message indicating that service related content, pre-stored or cached in a storage in a wireless User Equipment, UE, or the RAN, has been used by a UE. The method further comprises the steps of processing the LI notification message for identifying the service related content, and sending the identified service related content to the LI system as Content of Communication, CC, together with Intercept Related Information, IRI.

Further, it is provided herein, a method and embodiments thereof, which support Lawful Interception, LI, performed in a Radio Access Network, RAN. The method comprises the steps of receiving a service alert message from a wireless user equipment, UE, processing the service alert message, generating a LI notification message by means of the service alert message, and sending the LI notification message towards an addressed first node of a communications network.

Further, it is provided herein, a method and embodiments thereof, which method supports Lawful Interception, LI, performed in a wireless user equipment, UE. The method comprises the steps of generating a service alert message, when a service related content is to be used, and sending the service alert message towards a Radio Access Network, RAN.

Additionally, a method and embodiments thereof are provided, said method supports Lawful Interception, LI, performed in a wireless user equipment, UE, which comprises service related content, cached or pre-stored. The method comprises the steps of generating a LI notification message, when a service related content is to be used, and sending the LI notification message via a Radio Access Network connected to a communication network comprising a first node which is connected to a LI system.

According to another aspect for solving the problem, a first node of a communication network and embodiments of the first node are provided. The node is connected to a Lawful Interception, LI, system. The node comprises a communication interface and a main content functionality means adapted for receiving a LI notification message from a Radio Access Network, RAN, via the communication interface. Said LI notification message indicates that service related content, pre-stored or cached in a storage in a wireless User Equipment, UE, or the RAN, has been used by the UE. The main content functionality means is further adapted for processing the LI notification message for identifying the service related content; and for sending the identified service related content to the LI system as Content of Communication, CC, together with Intercept Related Information, IRI to the LI system.

Further, it is provided herein a node of a Radio Access Network, RAN, and embodiments of said node comprising a distributed content means configured to support Lawful Interception, LI. The node comprises a distributed content means which is adapted to receive a service alert message from a wireless user equipment, UE via an associated transceiver, wherein the distributed content means further is adapted to process the service alert message, to generate a LI notification message by means of the service alert message, and to send the LI notification message towards an addressed first node of a communications network via a communication interface.

Further, it is provided herein a wireless user equipment, UE, comprises a transceiver and a distributed content means for supporting Lawful Interception, LI. The distributed content means is configured to generate a service alert message, when service related content is to be used. The distributed content means is further adapted to send via the transceiver the service alert message towards an access point of a Radio Access Network.

Additionally, it is provided herein, a wireless user equipment, UE, comprising a transceiver and a distributed content means for supporting Lawful Interception, LI, wherein the distributed content means is configured to generate a LI notification message, when a service related content, cached or pre-stored in the UE, is to be used by the UE and to send the LI notification message via the transceiver and a Radio Access Network connected to a communication network comprising a first node which is connected to the LI system.

### BRIEF DESCRIPTION OF THE DRAWINGS

The foregoing, and other, objects, features and advantages of the present technology will be more readily understood upon reading the following detailed description in conjunction with the drawings in which:
Figure 1 is a block diagram of an exemplary Lawful Interception (LI) system and network according to prior art;
Figure 2 is a block diagram illustrating an embodiment of a communications network comprising a core network connected to a LI system;
Figure 3 is a flowchart of an embodiment of a method for enabling and supporting LI;
Figure 4 is a flowchart illustrating an embodiment of a method for supporting Lawful Interception in a Radio Access Network;
Figure 5 is a flowchart of an embodiment of a method for enabling and supporting LI when content used by the UE is stored in the UE;
Figure 6 is a flowchart of an embodiment of a method for enabling and supporting LI when the service related content used by the UE is stored in the wireless user equipment;
Figure 7 is a block diagram illustrating embodiments of a main content functionality means and a distributed content means in an exemplary communications network;
Figure 8 is a block diagram illustrating yet other embodiments of a main content functionality means and a distributed content means implemented in an exemplary communications network.

### DETAILED DESCRIPTION

In the following description, for purposes of explanation and not limitation, specific details are set forth, such as particular circuits, circuit components, techniques, etc. in order to provide a thorough understanding of the present invention. However, it will be apparent to one skilled in the art that the present technology may be practiced in other embodiments that depart from these specific details. In other instances, detailed descriptions of well-known methods, devices, and circuits are omitted so as not to obscure the description of the present technology with unnecessary detail.

The following disclosure describes a solution of the problem to perform LI when service related content is stored in a RAN or UE where conventional LI techniques are not applicable or operable when a user is activating and using a service application which content is distributed to a RAN or the UE. The described and provided solution is an uplink LI notification functionality comprising a main content functionality in a first node co-operating through signalling with a distributed content functionality of a node of a RAN and/or UE. The main content functionality is implemented as a main content functionality means 132 in the first node 132. The distributed content functionality means is implemented as distributed content functionality means, dcm, or shortened "distributed content means", in the RAN as RAN-based dcm 162, or the UE as UE-based dcm 172.

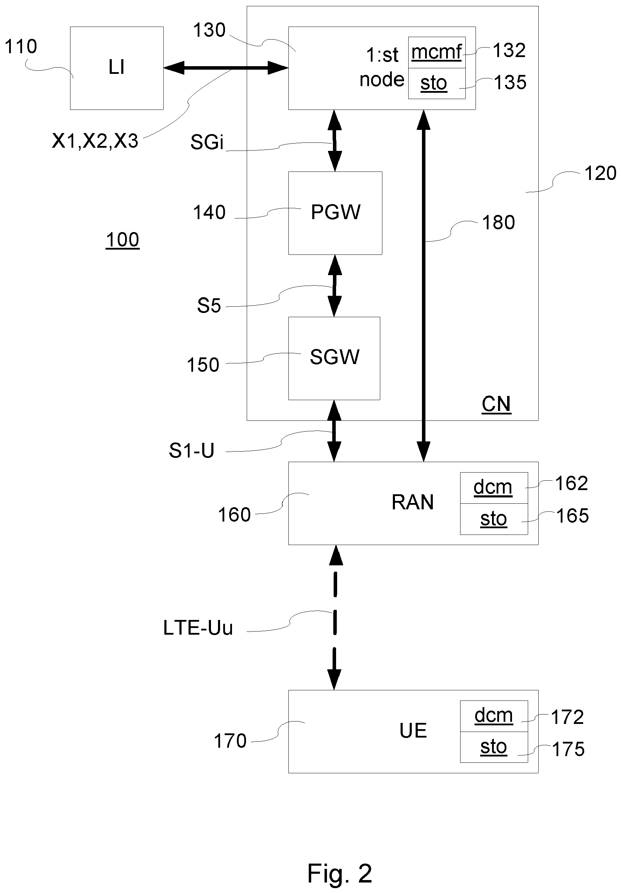

Figure 2 is a block diagram illustrating an embodiment of a communications network 100 comprising a core network 120 connected to a LI system 110.

The LI system in the embodiment illustrated in figure 2 is connected to a first node 130 wherein a main content functionality means, mcmf, 132 is provided. The LI system 110 and the main content functionality means in the first node 130 is communicating via interfaces X1, X2 and X3. Said interfaces are described in the background and figure 1. Thus, the IAP may be connected to a main content functionality means within the first node 130.

In the example illustrated in figure 2, the core network 120 comprises nodes 140, 150 wherein user plane gateways are located. An IAP of the LI system 110 may be connected to any type of user plane gateway, e.g. SGW, PGW and GGSN. In figure 1, as an example, the IAP of the LI system 110 is connected to a node 140 comprising a user plane gateway PGW. The same interfaces are also used for control plane nodes like MME and HLR/HSS.

In some embodiments, the main content functionality means is located in a node 140, 150 comprising a user plane gateway, e.g. SGW, PGW and GGSN, or a control plane nodes comprising e.g. MME functionality or HLR/HSS functionality. Thus, the first node is the node comprising the main content functionality means.

Streams of content flow through the CN in both directions - to the UE and from the UE. In one direction, content may come from any site in a LAN, WLAN, WAN, RAN, etc. The flow passes the (S)Gi, i.e. SGi or Gi, interface connected to the user plane gateway. LI is therefore possible to perform. The flow passes an interface S5 between the PGW 140 and a SGW 150, and through an interface S1-U between the SGW 150 and a RAN 160 comprising one or more radio base stations, e.g. eNB. The radio base station forwards the content flow via the air interface LTE-Uu to the designated UE 170.

Service related content is stored in a main content storage 135 in the first node. Distributed service related content is stored in the RAN 160 in a RAN-based distributed content storage 165 or in a UE-based distributed content storage 175.

The service related content in the first node and the service related content distributed to the RAN or UE may be synchronized or not.

In the embodiments of figures 2 to 9, the distributed content, i.e. the service related content to be used by a UE, is cached either in the RAN or in the UE. A User Equipment may be a wireless device providing different services to a user, services like telephony, Internet surfing, video streaming, software updating, etc. When a user of a wireless user equipment activates any service provided by the UE, the UE uses either cached/pre-stored data related to said service, i.e. service related content or service related data content, e.g. video content, software updates, newspaper subscriptions, etc, or received service related data stored in the RAN, or stored in a site and retrieved via e.g. Internet. The users may use different wireless UE:s, e.g. smartphones, mobile phones, cell phones, lap tops, etc.

The main content functionality means 132 and its associated communication interface 138 may according to one embodiment be adapted to receive and handle LI notification messages either via regular transmission links in the communications network 120 or a secure link 180 separated from the regular transmission links in the communications network 120.

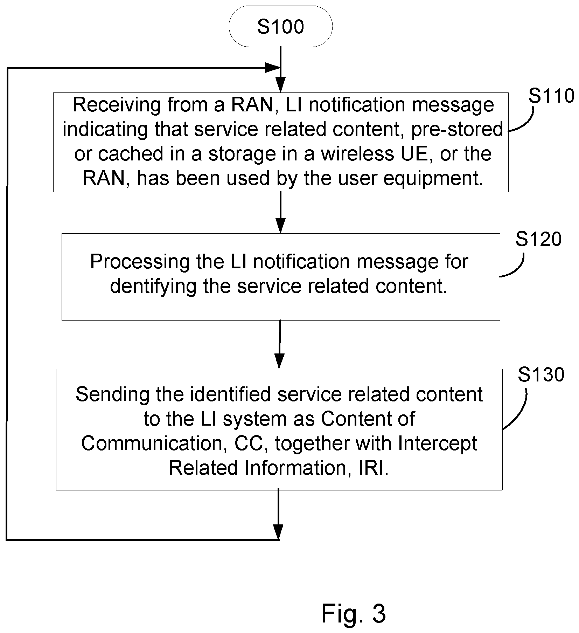

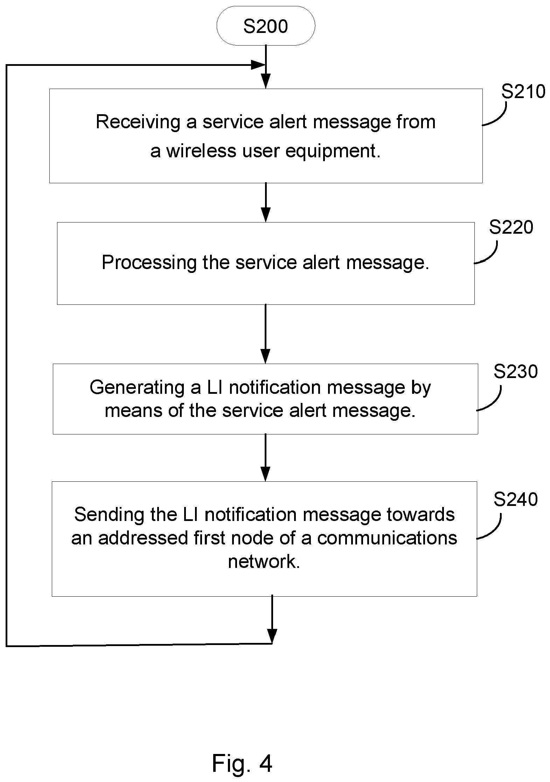

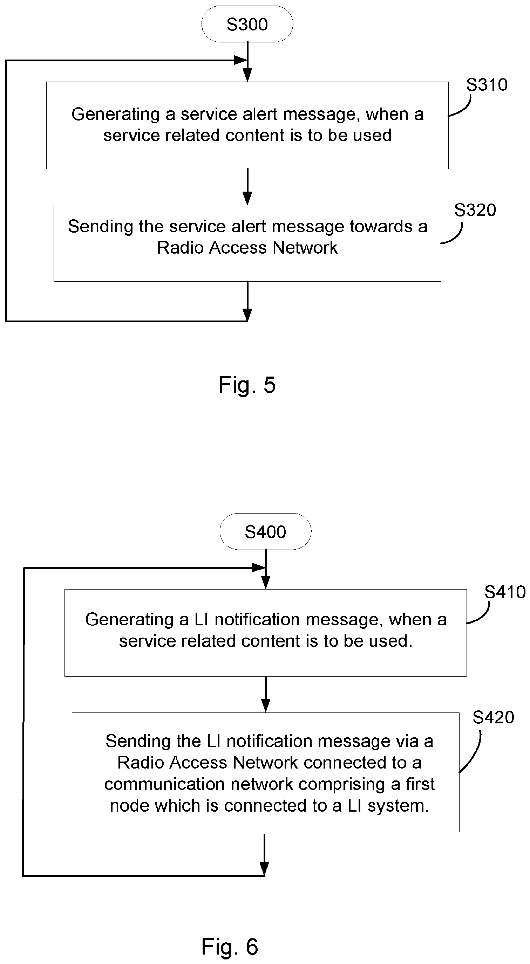

Figure 3 is a flowchart of an embodiment of a method S100 for enabling and supporting LI when service related content used by the UE is stored in the RAN. The method is performed in a first node 130 of a communication network 120, said node being connected to a Lawful Interception, LI, system 110. The method comprises a step of:
S110: - Receiving from a Radio Access Network, RAN, a LI notification message indicating that service related content, pre-stored or cached in a storage in a wireless User Equipment, UE, or the RAN, has been used by the UE, 170. The LI notification message is generated in the RAN, see method S200 and figure 4 below, or in the UE, which method S400 is presented further down with reference to figure 6. In the case the LI notification message is generated in the UE, said LI notification message is received in the first node from the RAN in the meaning that the RAN forwards the LI notification message generated in the UE. Thus, the LI notification message is received in the first node from or via the RAN.

According to some embodiments, the LI notification message comprises content identification information of the service related content and UE identification information. Optionally, the LI notification message may comprise time when the service related content was used.

It is desirable to identify a specific UE, or subscription, so that the LI can be performed by the main content functionality for the correct UE. UE identification information, or a UE identifier, is preferably a so called permanent UE identity, such as IMSI or MSISDN. This is a preferred option whenever any of these identifiers is available. For example, the RNC in UTRAN and BSC in GERAN are aware of the IMSI. In the LTE-case, the eNB doesn't hold any permanent UE-identifiers. Another possibility would be to use the UE IP-address of some of the PDN-connections that are terminated in a (S)Gi-LAN. In this case, the main content functionality means can initially receive information about IP-address and IMSI/MSISDN relations from GGSN/P-GW using RADIUS accounting principles. Then the IP-address can be used to identify a specific UE. This has some practical limitations as the same IP-address subnet may be reused between different PGWs, and even between different APNs in one PGW. To make this solution feasible, each PGW and APN may need to have a specific main content functionality means.

Still another possibility would be to use any temporary UE identifier available, e.g. in the eNB. Examples are the S-TMSI and the S1AP UE identifiers.

Embodiments where the service related content are RAN-based and UE-based can be implemented according to the above principles.

Still another option in the case of the main content functionality means being located in a PGW/GGSN is to use the EPC bearers for the UE in question and adapt the LI notification message to the PGW/GGSN technology for enabling for said entities to identify the IL notification message and the related UE. Normal LI-functionality may therefore be used together with the main content functionality.
The content of the LI notification message can take different forms. In the case, when the service related content in the first node and the service related content distributed to the RAN or UE are synchronized, it is sufficient to use a data pointer in the LI notification message. The data pointer is acontent identification information of the service related content. The main content functionality means is adapted to use the data pointers to identify which information that should be forwarded to the LI system.

One advantage with the use of content identification information, the data pointer, is that it is very hard to detect that LI is being performed.

If the service related content in the first node and the service related content distributed to the RAN or UE not are synchronized, the whole content may be included in the LI notification message. Thus, according to further embodiments the LI notification message comprises a copy of the service related content, UE identification information and, optionally, time when the service related content was used.

According to yet a further embodiment of the method, the LI notification message comprises an authentication header and/or a secure hash. The authentication header and the secure hash ensure that the correct notification is sent for the appropriate content. It is of course possible to manipulate the notification message. The idea with the hash is that one can create a hash that ensures that the content and the notification message are not modified on the path.

The embodiment of the method also comprises a step of:
S120: - Processing the LI notification message for identifying the service related content. The received LI notification message is processed in the first node for retrieving the service related content used by a target. If the LI notification message comprises content identification information of the service related content and UE identification information, said information is used for retrieving the corresponding content from a storage, main content storage 135, in the first node 130 or from a storage, main content storage 135, associated and/or connectable from said first node 130. When the service related content is identified and retrieved, the first node sends the service related content, UE information and, optionally, time information, when the content was used, to the LI system via the X2 and X3 interfaces.

If the LI notification message comprises a copy of the service related content, UE identification information and, optionally, time when the service related content was used, the first node processes the received LI notification message and identifies the received copy of the service related content in the message. The first node then sends the service related content, UE information and, optionally, time information, when the content was used, to the LI system via the X2 and X3 interfaces.

The embodiment of the method also comprises a step of:
**S130:** - Sending the identified service related content to the LI system as Content of Communication, CC, together with Intercept Related Information, IRI.

According to another embodiment of the method, the receiving step S110 is modified to involve:
**S112:** - Receiving the LI notification message via a secure link separated from the regular transmission links. One advantage is that in this case the LI notification message is not transported via the user plane gateways and these nodes are revealed from processing of these messages. In addition, it may be easier to keep the LI related communication undetectable if it is included as part of some other communication like Operations and Maintenance, O&M, related activities. Finally, it is also easier to achieve protection of the LI related communication when it uses existing security for existing communication like the O&M. This technology has it positive impact mainly on the RAN-side when sending the LI notification i.e. either send it over S1-U (using UE related bearers) or via a separate transmission link.

As mentioned in connection with **S110,** the LI notification message may be generated in the RAN, e.g. in a node like a base station, eNB, eNodeB, etc and sent to the first node.

The LI notification message can be transported using two main principles: inband-signalling and outband-signalling.

The inband-signalling implies that the LI notification message is transported using the EPC bearers for the UE in question. One example is the case of distributed content in the RAN, wherein the RAN injects user plane packets in GTP-U tunnels for the specific UE. Regarding the case where a distributed content means is in the UE, the main principle may be to also use user plane packets, i.e. the distributed content in the UE sends normal IP-packets towards the main content functionality means. The outband-signalling means that the LI notification message is not sent within any EPC bearers for the UE. Instead, the main content functionality means is directly addressable from the distributed content means in the RAN and the RAN sends the LI notification message directly towards the main content functionality means. The outband-signalling solution is not feasible for the case where distributed content is located in the UE as an UE only has the possibility to communicate over either user or control plane towards the mobile network.

The main content functionality means may also need to be addressable, e.g. in a (S)Gi plane it could have its own unique IP-address. The configuration of this IP-address to the distributed content means in the RAN and/or UE can be part of the configuration of the software and it can also be dynamically retrieved, for example using any DNS-based method.

Figure 4 is a flowchart illustrating an embodiment of a method **S200** for supporting Lawful Interception in a Radio Access Network, RAN. The embodiment comprises a step of:
**S210:** - Receiving a service alert message from a wireless user equipment, UE.

When a target initiate the use of any service related content, the target's UE is configured to generate a service alert message by means of any software stored in the UE. The software should not be modifiable by the end user, but it is part of the whole service delivery mechanism. According to one embodiment, the service alert message comprises information that a specified service related content, cached or pre-stored in the sending wireless UE, is used by the UE. This solution consists of UE cache that is prefilled using any method. The prefilling can be based on for example traditional unicasting mechanisms or it can be based on multi- or broadcast of information. One example of the latter is the usage of MBMS to prefill the UE cache simultaneously in multiple UEs.

Alternatively, according to further one embodiment, the service alert message comprises a request for a specified service related content cached or pre-stored in the RAN. The generation of a service alert message is further described hereafter, see method S300 and figure 5 below.

The embodiment further comprises a step of:
**S220:** - Processing the service alert message. The received message is processed to retrieve information about the service related content that is used by the UE. Said information is used for generating the LI notification message.

The embodiment further comprises a step of:
**S230:** - Generating a LI notification message by means of the service alert message.

As already specified above, different embodiments are provided. According to one embodiment of the method, the LI notification message comprises content identification information of the service related content, UE identification information. Optionally, the LI notification message may comprise time when the service related content was used. According to further embodiments, the LI notification message comprises a copy of the service related content, UE identification information and, optionally, time when the service related content was used. According to further embodiments, the LI notification message comprises an authentication header and/or a secure hash.

The embodiment further comprises a step of:
**S240:** - Sending the LI notification message towards an addressed first node of a communications network.

The sending of the LI notification message, step S230, may involve either inband-signalling or outband-signalling as described above. According to one embodiment of the method, the sending of the LI notification message, step S230, may therefore involve:
**S242A:** - Sending the LI notification message via bearers associated with the UE. This is the inband-signalling.

According to one alternative embodiment of the method, the sending of the LI notification message step S230 may comprise:
**S242B:** - Sending the LI notification message via a link separated from bearers associated with the UE. This is the outband-signalling.

According to one alternative embodiment of the method **S200,** the method may further comprise:
**S250:** - Sending the specified service related content to the requesting wireless UE. If the service alert message comprises a request for a specified service related content cached or pre-stored in the RAN, then the RAN is adapted to send the specified service related content to the requesting wireless UE which sent the service alert message.

When a target initiates the use of any service related content, the target's UE is configured to generate a service alert message by means of any software stored in the UE.

Figure 5 is a flowchart of an embodiment of a method **S300** for enabling and supporting LI when content is used by the UE, which content may be stored in the RAN.

The embodiment comprises:
**S310:** - Generating a service alert message, when a service related content is to be used. According to one embodiment, the service alert message may comprise information that a specified service related content, cached or pre-stored in the wireless UE, is to be used or has been used by the UE. Alternatively, the service alert message comprises a request for a specified service related content, cached or pre-stored in the RAN to be sent to the UE.

The embodiment further comprises:
**S320:** - Sending the service alert message towards a Radio Access Network, RAN. The service alert message is received by the RAN and processed in accordance with the above described method **S200** and embodiments thereof, see figure 4.

Alternatively, if the service alert message comprises a request for a specified service related content, cached or pre-stored in the RAN, the embodiment may further comprise:
**S330:** - receiving the specified service related content.

Figure 6 is a flowchart of an embodiment of a method for enabling and supporting LI when the service related content used by the wireless UE is stored in the wireless UE. The embodiment of the method for supporting Lawful Interception comprises a step of:
**S410:** - Generating a LI notification message, when service related content is to be used. This step involves also the generation of a message when service related content has been used. According to one embodiment, the LI notification message may comprise content identification information of the service related content, UE identification information. Optionally, the LI notification message may comprise time when the service related content was used. Alternatively, the LI notification message comprises a copy of the service related content, UE identification information and, optionally, time when the service related content was used.

According to some of the embodiment, the LI notification message comprises an authentication header and/or a secure hash.

The embodiment of the method for supporting Lawful Interception comprises further a step of:
**S420:-** Sending the LI notification message via a Radio Access Network connected to a communication network comprising a first node which is connected to the LI system. The LI notification message is sent to the Radio Access Network, RAN, 120 and the RAN is further adapted to forward the message to a first node 130 in the communication network, which node is connected to the LI system 110.

The activation of the LI notification functionality may be performed in different ways.

One principle to use for activation of LI notification functionality is that an activation or deactivation command is sent for all UEs. In this case, LI notification is an internal part of the distributed content functionality and there is no special need for a separate activation on UE basis, e.g. for UEs that are under LI.

Another possibility is that the main content functionality in the first node signals dynamically the activation and deactivation of LI for specific UEs. In both the RAN-based and UE-based distributed content functionality, it is feasible to use the described inband-signalling in the downlink. This means that the main content functionality means generates an activation or deactivation command message and distributes said command to the distributed content functionality in the UE or in the RAN. The messages may be encrypted to obstruct detection of the command message and LI activity.

When UE-based distributed content functionality is used, the above described activation procedure is enough as the distributed content functionality remembers the LI notification activation status. The situation is however different for RAN-based distributed content functionality. In that case, mobility in the RAN may result in a new distributed content functionality instance being allocated for the UE. This new, second instance will also need to know the LI notification activation status. This can be achieved by RAN-level signalling between the distributed content functionality means in the different instances, such as part of handover preparation related signalling. Another option is that one first distributed content means in a first instance informs the main content functionality means about the mobility allowing said main content functionality means to inform one second distributed content means in the second instance about the current LI notification activation status. The above described embodiments of main content functionality in the first node and distributed content functionality in a UE or node of a RAN may be implemented in digital electronically circuitry, or in computer hardware, firmware, software, or in combinations of them. Means, devices, and apparatuses may be implemented in a computer program product tangibly embodied in a machine readable storage device for execution by a programmable processor; and method steps may be performed by a programmable processor executing a program of instructions to perform functions of the invention by operating on input data and generating output.

The embodiments may advantageously be implemented in one or more computer programs that are executable on a programmable system including at least one programmable processor coupled to receive data and instructions from, and to transmit data and instructions to, a data storage system, at least one input device, and at least one output device. Each computer program may be implemented in a high-level procedural or object-oriented programming language or in assembly or machine language if desired; and in any case, the language may be a compiled or interpreted language. It is understood that any storage unit may comprise a different number of storage areas, and the illustrated number of data storage areas only is for illustrative purposes. One or several of the data storage areas may be physically separated from the other data storage areas, or may reside on the same physical media.

Generally, a processor will receive instructions and data from a read-only memory and/or a random access memory. Storage devices suitable for tangibly embodying computer program instructions and data include all forms of non-volatile memory, including by way of example semiconductor memory devices, such as EPROM (erasable programmable read only memory), EEPROM (electrically erasable programmable read only memory), and flash memory devices; magnetic disks such internal hard disks and removable disks; magneto-optical disks; and CD-ROM (Compact Disc Read-Only Memory) disks. Any of the foregoing may be supplemented by, or incorporated in, specially - designed ASICs (Application Specific Integrated Circuits).

Thus, the herein above described method and embodiments of the method may be implemented and provided as a computer program comprising computer program code which, when run in a processor of a system, causes the system to perform the method steps of said method and embodiments.

Further, it may be provided a computer program product comprising a computer program for implementing the above described method and embodiments of the method and a computer readable means on which the computer program is stored.

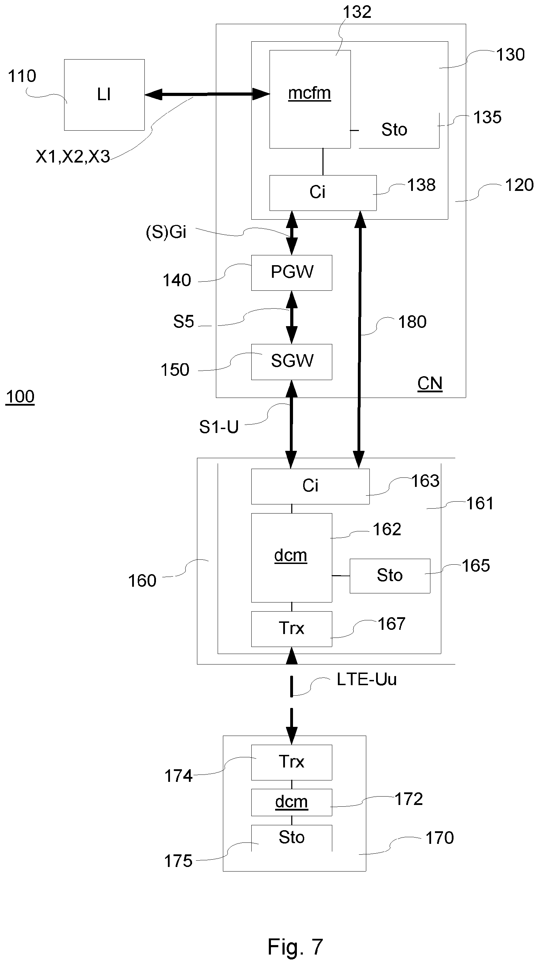

Figure 7 is a block diagram illustrating embodiments of a main content functionality means, a distributed content means in a RAN and a distributed content means in a UE.

A main content functionality means 132 is located in a node 130 of a communication network 120, e.g. a Core Network CN. Said node 130 is herein denoted as first node. Said means 132 is implemented to support the execution and running of a method and embodiments thereof as described above in relation to figure 3.

The first node 130 and main content functionality means, mcfm, 132 are connected to a LI system 110. Said main content functionality means 132 is adapted to receive via a connected associated communication interface 138 a LI notification message. Said LI notification message indicates which service related content that has been used by a user equipment, UE, 170. The service related content has been pre-stored or cached in a memory storage, Sto, 175 in a wireless User Equipment, UE, 170 or a storage, Sto, 165 in the RAN 160. The main content functionality means 132 is further adapted for processing the received LI notification message for identifying the service related content. The main content functionality means 132 is further adapted for sending the identified service related content to the LI system 110 as Content of Communication, CC, together with Intercept Related Information, IRI, to the LI system over the interfaces X2 and X3.

According to one embodiment of the main content functionality means 132, said means 132 is configured to process and handle LI notification messages comprising content identification information of the service related content, UE identification information and, optionally, time when the service related content was used. An alternative embodiment is also disclosed wherein the main content functionality means 132 is configured to handle and process LI notification messages comprising a copy of the service related content, UE identification information and, optionally, time when the service related content was used. According to some embodiments, the main content functionality means 132 is configured to handle and process LI notification messages comprising an authentication header and/or a secure hash.

If the LI notification message comprises content identification information of the service related content and UE identification information, said information is used for retrieving the corresponding content from a storage, main content storage 135, in the first node 130 or from a storage, main content storage 135, associated and/or connectable from said first node 130. When the service related content is identified and retrieved, the first node sends the service related content, UE information and, optionally, time information, when the content was used, to the LI system via the X2 and X3 interfaces.

The main content functionality means 132 and its associated communication interface 138 may according to one embodiment be adapted to receive and handle LI notification messages via a secure link 180 separated from the regular transmission links in the communications network 120, in this example illustrated as a link via interfaces (S)Gi, S5 and S1-U via the PGW 140 and SGW 150.

Figure 7 also shows a distributed content means, dcm, 162 in a Radio Access Network 160. The means 162 is configured to enable and support Lawful Interception, when the distributed content is cached in a storage or cache memory 165 in the RAN 160, e.g. in a node 161 such as a base station eNB. Said means 162 is implemented to support the execution and running of the method and embodiments thereof as described above in relation to figure 4.

The distributed content means 162 may be adapted to receive a service alert message from a wireless UE 170 via an associated connected transceiver 167. The distributed content means 162 is adapted to receive a service alert message from a wireless UE 170 and to generate a LI notification message by means of the service alert message, such as the information and/or data inserted in the service alert message. The distributed content means 162 may be adapted to send via an associated communication interface 163 the LI notification message towards an addressed first node 130 of a communications network, e.g. a core network 120.

According to one embodiment of the distributed content means 162, said means 162 is configured to generate and handle LI notification messages comprising content identification information of the service related content, UE identification information and, optionally, time when the service related content was used. An alternative embodiment is also disclosed wherein the means 162 is configured to generate and handle LI notification messages comprising a copy of the service related content, UE identification information and, optionally, time when the service related content was used. According to some embodiments, the distributed content means 162 is configured to generate and handle LI notification messages comprising an authentication header and/or a secure hash.

In further one embodiment the distributed content means 162 and its associated transceiver may be adapted to send LI notification messages via bearers associated with the UE.

According to an alternative embodiment, the distributed content means 162 and its associated transceiver may be adapted to send LI notification messages via a link separated from bearers associated with the UE.

In further one embodiment the distributed content means 162, the means 162 is adapted to receive and process service alert messages comprising information that a specified service related content, cached or pre-stored in the sending wireless UE, is used by the UE 170.

According to further one embodiment, the distributed content means 162 is adapted to receive and process service alert messages, wherein the service alert message comprises a request for a specified service related content cached or pre-stored in the RAN. The distributed content means 162 may therefore adapted to send via the transceiver 167 the specified service related content to the requesting wireless UE 170.

Figure 7 also shows a distributed content means 172 in a wireless UE 170. Said means 172 is implemented to support the execution and running of the methods and embodiments thereof as described above in relation to figures 5 and 6.

The distributed content means 172 is configured to generate a service alert message, when a service related content is to be used. The distributed content means 172 is further adapted to send via a connected, associated transceiver 174 the service alert message towards an access point or access node 161, e.g. a base station eNB of a Radio Access Network 160.

According to one embodiment, the distributed content means 172 is configured to generate and handle service alert messages comprising information that specified service related content, cached or pre-stored in a storage or cache memory in the wireless UE, is to be used by the UE.

According to another embodiment, the distributed content means 172 may be configured to generate service alert messages comprising a request for specified service related content, cached or pre-stored in the RAN. The distributed content means 172 is further adapted to receive via the associated and connected transceiver 174 the specified service related content to be used in the UE.

According to further one embodiment of a distributed content means 172 configured to support Lawful Interception, LI, in a wireless user equipment 170, UE. The wireless UE 170 comprises service related content cached or pre-stored, wherein the distributed content means 172 is configured to generate a LI notification message, when a service related content is to be used by the UE. The distributed content means is adapted to send the LI notification message via an associated and connected a transceiver 174 to a Radio Access Network 160 connected to a communication network 120 comprising a first node 130 which is connected to the LI system 110.

According to one embodiment of the distributed content means 172, said means 172 is configured to generate and handle LI notification messages comprising content identification information of the service related content, UE identification information and, optionally, time when the service related content was used. An alternative embodiment is also disclosed wherein the means 172 is configured to generate and handle LI notification messages comprising a copy of the service related content, UE identification information and, optionally, time when the service related content was used. According to some embodiments, the distributed content means 172 is configured to generate and handle LI notification messages comprising an authentication header and/or a secure hash.

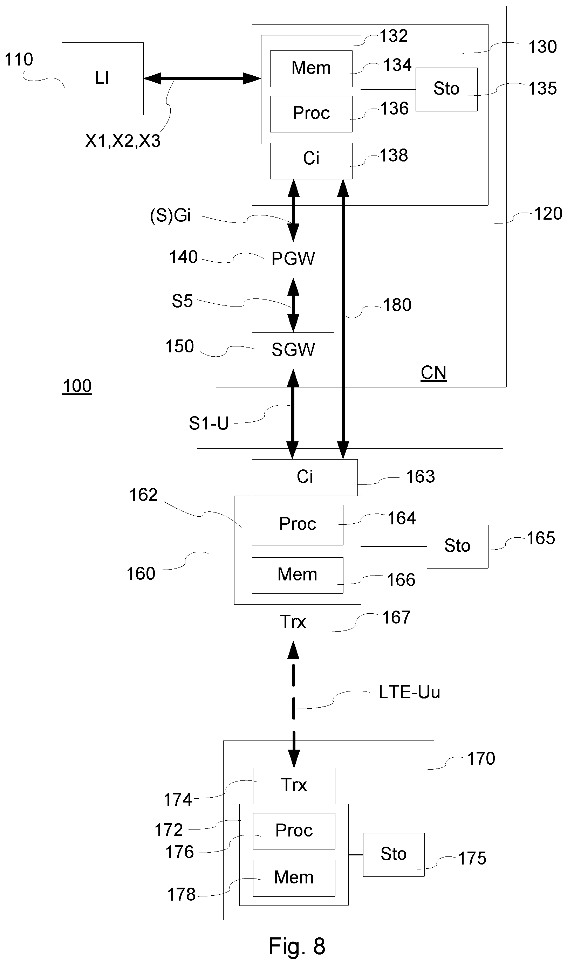

Figure 8 is a block diagram illustrating yet other embodiments of a main content functionality means, distributed content means in a RAN and distributed content means in a UE.

A main content functionality means 132 in a first node 130 of a communication network 100 is illustrated in figure 8. Said node and main content functionality means 132 is connected to a LI system 110 via interfaces X1, X2 and X3. Said main content functionality means 132 comprises a processor circuitry operative of:
- receiving (S110) from a Radio Access Network, RAN, a LI notification message indicating that service related content, pre-stored or cached in a storage in a wireless User Equipment, UE, or the RAN, has been used by user equipment (170), UE;
- processing (S120) the LI notification message for identifying the service related content;
- sending (S130) the identified service related content to the LI system as Content of Communication, CC, together with Intercept Related Information, IRI.

The main content functionality means 132 comprises the processing circuitry involving a processor 136 and a memory 134, and wherein said memory is containing instructions executable by said processor. Said means 132 is implemented to support the execution and running of a method and embodiments thereof as described above in relation to figure 3. Said main content functionality means 132 is connected to a communication interface 138 for enabling communication with other sites 140,150 in the CN 120 and the RAN 160 via interfaces, e.g. (S)Gi, S1-U, etc. The main content functionality means 132 and its associated communication interface 138 may according to one embodiment be adapted to receive and handle LI notification messages via a secure link 180 separated from the regular transmission links in the communications network 120.

Said LI notification message indicates which service related content that has been used by a user equipment, UE, 170. The service related content has been pre-stored or cached in a memory storage, Sto, 175 in a wireless User Equipment, UE, 170 or a storage, Sto, 165 in the RAN 160.

If a LI notification message comprises content identification information of the service related content and UE identification information, said information is used for retrieving the corresponding content from a storage, main content storage 135, in the first node 130 or from a storage, main content storage 135, associated and/or connectable from said first node 130. When the service related content is identified and retrieved, the first node sends the service related content, UE information and, optionally, time information, when the content was used, to the LI system via the X2 and X3 interfaces.

According another embodiment, the processor 136 and memory 134 may involve receiving means for performing S110, processing means for performing S120, and sending means for performing S230, wherein said means are implemented as computer program instructions stored in the memory 136 and executable by the processor 134.

In figure 8 is also an embodiment of a distributed content means 162 in a RAN illustrated, which means 162 is configured to support Lawful Interception. The distributed content means 162 comprises a processor circuitry operative of:
- receiving, S210, a service alert message from a wireless user equipment, UE;
- processing, S220, the service alert message;
- generating, S230, a LI notification message by means of the service alert message;
- sending, S240, the LI notification message towards an addressed first node of a communications network.

The distributed content means 162 in the RAN comprises the processing circuitry involving a processor 164 and a memory 166, and wherein said memory 166 is containing instructions executable by said processor 164. Said means 162 is implemented to support the execution and running of a method and embodiments thereof as described above in relation to figure 4.The distributed content means 162 is connected to an associated transceiver 167 for enabling communication over the air interface LTE-Uu with the UE 170. The distributed content means 162 is further connected to an associated communication interface 163 for enabling communication over the interface S1-U with the CN 120.

According another embodiment, the processor 164 and memory 166 may involve receiving means for performing S210, processing means for performing S220, generating means for performing S230 and sending means for performing S240, wherein said means are implemented as computer program instructions stored in the memory 166 and executable by the processor 164.

In figure 8 is also an embodiment of a distributed content means 172 illustrated, which enables and supports Lawful Interception, LI, in a wireless user equipment, UE. The distributed content means 172 comprises a processor circuitry operative of:
- generating, S310, a service alert message, when a service related content is to be used;
- sending, S320, the service alert message towards a Radio Access Network, RAN.

When the wireless UE 170 comprises service related content, cached or pre-stored, the processor circuitry is further operative of:
- generating, S410, a LI notification message, when a service related content is to be used;
- sending, S420, the LI notification message via a Radio Access Network connected to a communication network 120 comprising a first node 130 which is connected to the LI system 110.

The distributed content means 172 comprises the processing circuitry involving a processor 176 and a memory 178, and wherein said memory 178 is containing instructions executable by said processor 176. Said means 172 is implemented to support the execution and running of methods and embodiments thereof as described above in relation to figures 5 and 6.The distributed content means 172 is further connected to an associated transceiver 174 for enabling wireless communication over the air interface LTE-Uu with the RAN 160.

According another embodiment, the processor 176 and memory 178 may involve generating means for performing S310 and/or S410, and sending means for performing S320 and/or S420, wherein said means are implemented as computer program instructions stored in the memory 178 and executable by the processor 176.

The invention allows LI functionality to be supported for UE or RAN cache or content placed far out in the network without needing to distribute the GGSN or SGW/PGW far out in the network. It also enables LI support without the possibility to detect this on the transport interfaces above the RAN cache or content. The uplink notifications, service alert message and LI notification message, have potentially very low bandwidth and are thus very difficult to detect compared to other solution proposals with mirroring of content data from cache to core network and LI function.

A number of embodiments of the present invention have been described. It will be understood that various modifications may be made without departing from the scope of the enclosed claims. Therefore, other implementations could be considered to be within the scope of the following claims.

### References

[1] 3GPP TS 33.106 "Lawful Interception requirements (Release 12)";
[2] 3GPP TS 33.107 "Lawful interception architecture and functions (Release 12)";
[3] 3GPP TS 33.108 "Handover interface for Lawful Interception" (Release 12);
[4] "SA-3LI Living Document: Mobile Cloud Services Lawful Interception Impact Evaluation;SA3-LI LD MOBILE CLOUD SERVICES", ETSI DRAFT; SA3-LI LD MOBILE CLOUD SERVICES, EUROPEAN TELECOMMUNICATIONS STANDARDS INSTITUTE (ETSI), 650, ROUTE DES LUCIOLES;F-06921 SOPHIA-ANTIPOLIS; FRANCE, Vol. LI-LI_am, no. V0.1.2, 20 September 2013 (2013-09-20), pages 1-75, XP014213634,
   [RETRIEVED ON 2013-09-20]

### Abbrivation list

- SGW: Serving Gateway
- PGW: Public Data Network Gateway
- PDN: Public Data Network
- GGSN: Gateway GPRS Support Node
- GPRS: General Packet Radio Packet Service
- SGSN: Serving GPRS Support Node
- 3GPP: Third Generation Partnership Project
- LTE: Long Term Evolution
- MME: Mobility Management Entity
- HI: Handover Interface
- HLR: Home Location Register
- HSS: Home Subscriber Server
- LI: Lawful Intercept(-ion)
- RAN: Radio Access Network
- DF: Delivery Function
- MF: Mediation Function
- LEMF: Law Enforcement Monitoring Facility
- ADMF: Administration Function
- EPC: Evolved Packet Core
- CN: Core Network
- MBMS: Multimedia Broadcast Multicast Services
- IMSI: International Mobile Subscriber Identity
- MSISDN: Mobile Station Integrated Services Digital Network
- IMEI: international Mobile Equipment identity
- IP: Internet Protocol
- eNB: base station in LTE system
- RNC: Radio Network Controller
- UTRAN: Universal Terrestrial Radio Access Network
- BSC: Base Station Controller
- GERAN: GSM EDGE Radio Access Network
- TMSI: Temporary Mobile Subscriber Identity
- APN: Access Point Name

## Claims

1. A method performed in a first node (130) of a communication network (120), said node being connected to a Lawful Interception, LI, system (110), said method comprising:
- receiving (S110) from a Radio Access Network (160), RAN, a LI notification message indicating that service related content, pre-stored or cached in a storage in a wireless User Equipment (170), UE, or the RAN (160), has been used by the UE (170);
- processing (S120) the LI notification message for identifying the service related content;
- sending (S130) the identified service related content to the LI system (110) as Content of Communication, CC, together with Intercept Related Information, IRI.

2. The method according to claim 1, wherein the LI notification message comprises content identification information of the service related content or a copy of the service related content, and UE identification information.

3. The method according to the preceding claims, wherein the LI notification message comprises an authentication header and/or a secure hash.

4. The method according to any of claims 1-3, wherein the receiving step (S110) comprises:
- receiving (S112B) the LI notification message via a secure link separated from the regular transmission links.

5. A method for supporting Lawful Interception, LI, performed in an evolved NodeB (161), eNB, of a Radio Access Network (160), RAN, the method comprises:
- receiving (S210) a service alert message from a wireless user equipment (170), UE;
- processing (S220) the service alert message;
- generating (S230) a LI notification message by means of the service alert message, wherein the LI notification message indicates that service related content, pre-stored or cached in a storage in the UE(170) or the RAN (160), has been used by the UE (170); and
- sending (S240) the LI notification message towards an addressed first node of a communications network (120).

6. The method according to claim 5, wherein the sending of the LI notification message step comprises:
- sending (S242A) the LI notification message via bearers associated with the UE.

7. The method according to any of claims 5 - 6, wherein the service alert message comprises information that a specified service related content, cached or pre-stored in the sending wireless UE, is used by the UE.

8. The method according to any of claims 5 - 7, wherein the service alert message comprises a request for a specified service related content cached or pre-stored in the RAN, the method further comprises:
- sending (S250) the specified service related content to the requesting wireless UE.

9. A method for supporting Lawful Interception, LI, performed in a wireless user equipment (170), UE, which comprises service related content, cached or pre-stored, the method comprises:
- generating (S410) a LI notification message, when a service related content is to be used;
- sending (S420) the LI notification message via a Radio Access Network (160), RAN, connected to a communication network (120) comprising a first node (130) which is connected to a LI system (110), wherein the LI notification message indicates that service related content, pre-stored or cached in a storage in the wireless UE (170) has been used by the UE (170).

10. The method according to claim 9, wherein the LI notification message comprises content identification information of the service related content or a copy of the service related content, and UE identification information.

11. A first node (130) of a communication network (120), which node is connected to a Lawful Interception, LI, system (110), said node comprising a communication interface (138) and a main content functionality means (132) adapted for receiving a LI notification message, from a Radio Access Network, RAN, (160) via the communication interface (138), said LI notification message indicating that service related content, pre-stored or cached in a storage in a wireless User Equipment, UE, or the RAN, has been used by the UE (170), UE, said main content functionality means (132) is further adapted for processing the LI notification message for identifying the service related content; and for sending the identified service related content to the LI system (110) as Content of Communication, CC, together with Intercept Related Information, IRI to the LI system.

12. An evolved NodeB (161), eNB, of a Radio Access Network (160), RAN, said eNB (161) comprising a distributed content means (162) configured to support Lawful Interception, LI, comprising a distributed content means (162) which is adapted to receive a service alert message from a wireless user equipment, UE (170) via an associated transceiver (167), wherein the distributed content means (162) further is adapted to process the service alert message, to generate a LI notification message by means of the service alert message, wherein the LI notification message indicates that service related content, pre-stored or cached in a storage in the wireless UE (170) or the RAN (160), has been used by UE (170) and to send the LI notification message towards an addressed first node (130) of a communications network (120) via a communication interface (163).

13. The eNB according to claim 12, wherein the distributed content means (162) is adapted to process service alert messages comprising information that a specified service related content, cached or pre-stored in the sending wireless UE, is used by the UE (170).

14. The eNB according to any of claims 12 - 13, wherein the distributed content means (162) is adapted to process service alert messages comprising a request for a specified service related content cached or pre-stored in the RAN, the distributed content means (162) is further adapted to send via the transceiver (167) the specified service related content to the requesting wireless UE (170).

15. A wireless user equipment (170), UE, comprising a transceiver (174) and a distributed content means (172) for supporting Lawful Interception, LI, wherein the distributed content means (172) is configured to generate a LI notification message, when a service related content, cached or pre-stored in the UE (170), is to be used by the UE (170), and to send the LI notification message via the transceiver (174) and a Radio Access Network (160), RAN, connected to a communication network (120) comprising a first node (130) which is connected to the LI system (110), wherein the LI notification message indicates that service related content, pre-stored or cached in a storage in the UE (170) has been used by the UE (170) .

## Patentansprüche

1. Verfahren, das in einem ersten Knoten (130) eines Kommunikationsnetzwerks (120) durchgeführt wird, wobei der Knoten mit einem System (110) für rechtmäßiges Abfangen, LI, verbunden ist, wobei das Verfahren Folgendes umfasst:
- Empfangen (S110) einer LI-Benachrichtigungsnachricht, die anzeigt, dass ein dienstbezogener Inhalt, der in einem Speicher in einer drahtlosen Teilnehmereinrichtung (170), UE, oder einem Funkzugangsnetzwerk (160), RAN, vorab gespeichert oder zwischengespeichert wurde, von der UE (170) verwendet wird, vom RAN (160);
- Verarbeiten (S120) der LI-Benachrichtigungsnachricht zum Identifizieren des dienstbezogenen Inhalts;
- Senden (S130) des identifizierten dienstbezogenen Inhalts als Kommunikationsinhalt, CC, zusammen mit auf das Abfangen bezogenen Informationen, IRI, an das LI-System (110).

2. Verfahren nach Anspruch 1, wobei die LI-Benachrichtigungsnachricht Inhaltsidentifikationsinformationen des dienstbezogenen Inhalts oder eine Kopie des dienstbezogenen Inhalts sowie UE-Identifikationsinformationen umfasst.

3. Verfahren nach einem der vorhergehenden Ansprüche, wobei die LI-Benachrichtigungsnachricht einen Authentifizierungsheader und/oder einen sicheren Hash umfasst.

4. Verfahren nach einem der Ansprüche 1-3, wobei der Schritt des Empfangens (S110) Folgendes umfasst:
- Empfangen (S112B) der LI-Benachrichtigungsnachricht via eine sichere Verbindung, die von den regulären Übertragungsverbindungen getrennt ist.

5. Verfahren zum Unterstützen des rechtmäßigen Abfangens, LI, das in einem Evolved NodeB (161), eNB, eines Funkzugangsnetzwerks (160), RAN, durchgeführt wird, wobei das Verfahren Folgendes umfasst:
- Empfangen (S210) einer Dienstwarnnachricht von einer drahtlosen Teilnehmereinrichtung (170), UE;
- Verarbeiten (S220) der Dienstwarnnachricht;
- Erzeugen (S230) einer LI-Benachrichtigungsnachricht mittels der Dienstwarnnachricht, wobei die LI-Benachrichtigungsnachricht anzeigt, dass ein dienstbezogener Inhalt, der in einem Speicher der UE (170) oder im RAN (160) vorab gespeichert oder zwischengespeichert wurde, von der UE (170) verwendet wird; und
- Senden (S240) der LI-Benachrichtigungsnachricht an einen adressierten ersten Knoten eines Kommunikationsnetzwerks (120).

6. Verfahren nach Anspruch 5, wobei der Schritt des Sendens der LI-Benachrichtigungsnachricht Folgendes umfasst:
- Senden (S242A) der LI-Benachrichtigungsnachricht via Träger, die mit der UE verknüpft sind.

7. Verfahren nach einem der Ansprüche 5-6, wobei die Dienstwarnnachricht Informationen umfasst, dass ein spezifizierter dienstbezogener Inhalt, der in der sendenden drahtlosen UE zwischengespeichert oder vorab gespeichert wurde, von der UE verwendet wird.

8. Verfahren nach einem der Ansprüche 5-7, wobei die Dienstwarnnachricht eine Anforderung eines spezifizierten dienstbezogenen Inhalts, der im RAN zwischengespeichert oder vorab gespeichert wurde, umfasst, wobei das Verfahren Folgendes umfasst:
- Senden (S250) des spezifizierten dienstbezogenen Inhalts an die anfordernde drahtlose UE.

9. Verfahren zum Unterstützen des rechtmäßigen Abfangens, LI, das in einer drahtlosen Teilnehmereinrichtung (170), UE, durchgeführt wird, die einen dienstbezogenen Inhalt umfasst, der zwischengespeichert oder vorab gespeichert wurde, wobei das Verfahren Folgendes umfasst:
- Erzeugen (S410) einer LI-Benachrichtigungsnachricht, wenn ein dienstbezogener Inhalt verwendet werden soll;
- Senden (S420) der LI-Benachrichtigungsnachricht via ein Funkzugangsnetzwerk (160), RAN, das mit einem Kommunikationsnetzwerk (120) verbunden ist, das einen ersten Knoten (130) umfasst, der mit einem LI-System (110) verbunden ist, wobei die LI-Benachrichtigungsnachricht anzeigt, dass ein dienstbezogener Inhalt, der in einem Speicher in der drahtlosen UE (170) vorab gespeichert oder zwischengespeichert wurde, von der UE (170) verwendet wird.

10. Verfahren nach Anspruch 9, wobei die LI-Benachrichtigungsnachricht Inhaltsidentifikationsinformationen des dienstbezogenen Inhalts oder eine Kopie des dienstbezogenen Inhalts sowie UE-Identifikationsinformationen umfasst.

11. Erster Knoten (130) eines Kommunikationsnetzwerks (120), wobei der Knoten mit einem System (110) für ein rechtmäßiges Abfangen, LI, verbunden ist, wobei der Knoten eine Kommunikationsschnittstelle (138) und ein Hauptinhaltsfunktionalitätsmittel (132) umfasst, die zum Empfangen einer LI-Benachrichtigungsnachricht via die Kommunikationsschnittstelle (138) von einem Funkzugangsnetzwerk, RAN, (160) angepasst sind, wobei die LI-Benachrichtigungsnachricht anzeigt, dass ein dienstbezogener Inhalt, der in einem Speicher in einer drahtlosen Teilnehmereinrichtung, UE, oder im RAN vorab gespeichert oder zwischengespeichert wurde, von der UE (170), UE, verwendet wird, wobei das Hauptinhaltsfunktionalitätsmittel (132) ferner zum Verarbeiten der LI-Benachrichtigungsnachricht zum Identifizieren des dienstbezogenen Inhalts und zum Senden des identifizierten dienstbezogenen Inhalts als Kommunikationsinhalt, CC, zusammen mit auf das Abfangen bezogenen Informationen, IRI, an das LI-System (110) angepasst ist.

12. Evolved NodeB (161), eNB, eines Funkzugangsnetzwerks (160), RAN, wobei der eNB (161) ein verteiltes Inhaltsmittel (162) umfasst, das dazu ausgelegt ist, ein rechtmäßiges Abfangen, LI, zu unterstützen, das ein verteiltes Inhaltsmittel (162) umfasst, das angepasst ist, via einen verknüpften Sendeempfänger (167) eine Dienstwarnnachricht von einer drahtlosen Teilnehmereinrichtung, UE (170) zu empfangen, wobei das verteilte Inhaltsmittel (162) ferner angepasst ist, die Dienstwarnnachricht zu verarbeiten, mittels der Dienstwarnnachricht eine LI-Benachrichtigungsnachricht zu erzeugen, wobei die LI-Benachrichtigungsnachricht anzeigt, dass ein dienstbezogener Inhalt, der in einem Speicher in der drahtlosen UE (170) oder im RAN (160) vorab gespeichert oder zwischengespeichert wurde, von der UE (170) verwendet wird, und die LI-Benachrichtigungsnachricht via eine Kommunikationsschnittstelle (163) an einen adressierten ersten Knoten (130) eines Kommunikationsnetzwerks (120) zu senden.

13. eNB nach Anspruch 12, wobei das verteilte Inhaltsmittel (162) angepasst ist, Dienstwarnnachrichten, die Informationen umfassen, dass ein spezifizierter dienstbezogener Inhalt, der in der sendenden drahtlosen UE zwischengespeichert oder vorab gespeichert wurde, von der UE (170) verwendet wird, zu verarbeiten.

14. eNB nach einem der Ansprüche 12-13, wobei das verteilte Inhaltsmittel (162) angepasst ist, Dienstwarnnachrichten, die eine Anforderung eines spezifizierten dienstbezogenen Inhalts, der im RAN zwischengespeichert oder vorab gespeichert wurde, umfassen, zu verarbeiten, das verteilte Inhaltsmittel (162) ferner angepasst ist, den spezifizierten dienstbezogenen Inhalt via den Sendeempfänger (167) an die anfordernde drahtlose UE (170) zu senden.

15. Drahtlose Teilnehmereinrichtung (170), UE, die einen Sendeempfänger (174) und ein verteiltes Inhaltsmittel (172) zum Unterstützen des rechtmäßigen Abfangens, LI, umfasst, wobei das verteilte Inhaltsmittel (172) dazu ausgelegt ist, eine LI-Benachrichtigungsnachricht zu erzeugen, wenn ein dienstbezogener Inhalt, der in der UE (170) zwischengespeichert oder vorab gespeichert wurde, von der UE (170) verwendet werden soll, und die LI-Benachrichtigungsnachricht via den Sendeempfänger (174) und ein Funkzugangsnetzwerk (160), RAN, das mit einem Kommunikationsnetzwerk (120) verbunden ist, das einen ersten Knoten (130) umfasst, der mit dem LI-System (110) verbunden ist, zu senden, wobei die LI-Benachrichtigungsnachricht anzeigt, dass ein dienstbezogener Inhalt, der in einem Speicher in der UE (170) vorab gespeichert oder zwischengespeichert wurde, von der UE (170) verwendet wird.

## Revendications

1. Procédé réalisé dans un premier nœud (130) d'un réseau de communication (120), ledit nœud étant connecté à un système d'interception légale, LI, (110), ledit procédé comprenant :
- la réception (S110), à partir d'un réseau d'accès radio (160), RAN, d'un message de notification de LI indiquant qu'un contenu connexe de service, pré-stocké ou mis en mémoire cache dans un stockage dans un équipement utilisateur (170), UE, sans fil ou le RAN (160), a été utilisé par l'UE (170) ;
- le traitement (S120) du message de notification de LI pour identifier le contenu connexe de service ;
- l'envoi (S130) du contenu connexe de service identifié au système de LI (110) en tant que contenu de communication, CC, conjointement avec des informations connexes d'interception, IRI.

2. Procédé selon la revendication 1, dans lequel le message de notification de LI comprend des informations d'identification de contenu du contenu connexe de service ou une copie du contenu connexe de service, et des informations d'identification d'UE.

3. Procédé selon les revendications précédentes, dans lequel le message de notification de LI comprend un en-tête d'authentification et/ou un hachage sécurisé.

4. Procédé selon une quelconque des revendications 1 à 3, dans lequel l'étape de réception (S110) comprend :
- la réception (S112B) du message de notification de LI par l'intermédiaire d'une liaison sécurisée séparée des liaisons de transmission régulières.

5. Procédé pour prendre en charge une interception légale, LI, réalisée dans un NœudB évolué (161), eNB, d'un réseau d'accès radio (160), RAN, le procédé comprenant :
- la réception (S210) d'un message d'alerte de service à partir d'un équipement utilisateur (170), UE, sans fil ;
- le traitement (S220) du message d'alerte de service ;
- la génération (S230) d'un message de notification de LI au moyen du message d'alerte de service, dans lequel le message de notification de LI indique qu'un contenu connexe de service, pré-stocké ou mis en mémoire cache dans un stockage dans l'UE(170) ou le RAN (160), a été utilisé par l'UE (170) ; et
- l'envoi (S240) du message de notification de LI vers un premier nœud adressé d'un réseau de communication (120).

6. Procédé selon la revendication 5, dans lequel l'envoi du message de notification de LI l'étape comprend :
- l'envoi (S242A) du message de notification de LI par l'intermédiaire de porteuses associées à l'UE.

7. Procédé selon une quelconque des revendications 5 à 6, dans lequel le message d'alerte de service comprend des informations qu'un contenu connexe de service spécifié, mis en mémoire cache ou pré-stocké dans l'UE sans fil d'envoi, est utilisé par l'UE.

8. Procédé selon une quelconque des revendications 5 à 7, dans lequel le message d'alerte de service comprend une demande d'un contenu connexe de service spécifié mis en mémoire cache ou pré-stocké dans le RAN, le procédé comprenant en outre :
- l'envoi (S250) du contenu connexe de service spécifié à l'UE sans fil de demande.

9. Procédé pour prendre en charge l'interception légale, LI, réalisée dans un équipement utilisateur (170), UE, sans fil qui comprend un contenu connexe de service, mis en mémoire cache ou pré-stocké, le procédé comprenant :
- la génération (S410) d'un message de notification de LI, lorsqu'un contenu connexe de service doit être utilisé ;
- l'envoi (S420) du message de notification de LI par l'intermédiaire d'un réseau d'accès radio (160), RAN, connecté à un réseau de communication (120) comprenant un premier nœud (130) qui est connecté à un système de LI (110), dans lequel le message de notification de LI indique qu'un contenu connexe de service, pré-stocké ou mis en mémoire cache dans un stockage dans l'UE (170) sans fil, a été utilisé par l'UE (170).

10. Procédé selon la revendication 9, dans lequel le message de notification de LI comprend des informations d'identification de contenu du contenu connexe de service ou une copie du contenu connexe de service, et des informations d'identification d'UE.

11. Premier nœud (130) d'un réseau de communication (120), lequel nœud est connecté à un système d'interception légale, LI, (110), ledit nœud comprenant une interface de communication (138) et un moyen de fonctionnalité de contenu principal (132) adapté pour recevoir un message de notification de LI, à partir d'un réseau d'accès radio, RAN, (160) par l'intermédiaire de l'interface de communication (138), ledit message de notification de LI indiquant qu'un contenu connexe de service, pré-stocké ou mis en mémoire cache dans un stockage dans un équipement utilisateur, UE, sans fil ou le RAN, a été utilisé par l'UE (170), UE, ledit moyen de fonctionnalité de contenu principal (132) étant en outre adapté pour traiter le message de notification de LI pour identifier le contenu connexe de service ; et pour envoyer le contenu connexe de service identifié au système de LI (110) en tant que contenu de communication, CC, conjointement avec des informations connexes d'interception, IRI, au système de LI.

12. NœudB évolué (161), eNB, d'un réseau d'accès radio (160), RAN, ledit eNB (161) comprenant un moyen de contenu distribué (162) configuré pour prendre en charge une interception légale, LI, comprenant un moyen de contenu distribué (162) qui est adapté pour recevoir un message d'alerte de service à partir d'un équipement utilisateur, UE, (170) sans fil par l'intermédiaire d'un transmetteur-récepteur associé (167), dans lequel le moyen de contenu distribué (162) en outre est adapté pour traiter le message d'alerte de service, pour générer un message de notification de LI au moyen du message d'alerte de service, dans lequel le message de notification de LI indique qu'un contenu connexe de service, pré-stocké ou mis en mémoire cache dans un stockage dans l'UE (170) sans fil ou le RAN (160), a été utilisé par l'UE (170) et pour envoyer le message de notification de LI à un premier nœud adressé (130) d'un réseau de communication (120) par l'intermédiaire d'une interface de communication (163).

13. eNB selon la revendication 12, dans lequel le moyen de contenu distribué (162) est adapté pour traiter des messages d'alerte de service comprenant des informations qu'un contenu connexe de service spécifié, mis en mémoire cache ou pré-stocké dans l'UE sans fil d'envoi, est utilisé par l'UE (170).

14. eNB selon une quelconque des revendications 12 à 13, dans lequel le moyen de contenu distribué (162) est adapté pour traiter des messages d'alerte de service comprenant une demande d'un contenu connexe de service spécifié mis en mémoire cache ou pré-stocké dans le RAN, le moyen de contenu distribué (162) étant en outre adapté pour envoyer, par l'intermédiaire du transmetteur-récepteur (167), le contenu connexe de service spécifié à l'UE sans fil de demande (170).

15. Équipement utilisateur (170), UE, sans fil, comprenant un transmetteur-récepteur (174) et un moyen de contenu distribué (172) pour prendre en charge une interception légale, LI, dans lequel le moyen de contenu distribué (172) est configuré pour générer un message de notification de LI, lorsqu'un contenu connexe de service, mis en mémoire cache ou pré-stocké dans l'UE (170), doit être utilisé par l'UE (170), et pour envoyer le message de notification de LI par l'intermédiaire du transmetteur-récepteur (174) et d'un réseau d'accès radio (160), RAN, connecté à un réseau de communication (120) comprenant un premier nœud (130) qui est connecté au système de LI (110), dans lequel le message de notification de LI indique qu'un contenu connexe de service, pré-stocké ou mis en mémoire cache dans un stockage dans l'UE (170), a été utilisé par l'UE (170).
